# EUROPÄISCHE PATENTSCHRIFT

(11) **EP 1 997 007 B1**
(45) Veröffentlichungstag und Bekanntmachung des Hinweises auf die Patenterteilung: **25.08.2010**
(21) Anmeldenummer: 07726235.0
(22) Anmeldetag: 26.01.2007
(51) Int. Cl.: G06F 11/10

(54) **VERFAHREN UND MANAGEMENTSYSTEM ZUM KONFIGURIEREN EINES INFORMATIONSSYSTEMS**
METHOD AND MANAGEMENT SYSTEM FOR CONFIGURING AN INFORMATION SYSTEM
PROCÉDÉ ET SYSTÈME DE GESTION CONÇUS POUR CONFIGURER UN SYSTÈME D'INFORMATION

(30) Priorität: 23.03.2006 DE 102006013514
(43) Veröffentlichungstag der Anmeldung: 03.12.2008
(60) Teilanmeldung: 10166470.4
(73) Patentinhaber: Fujitsu Technology Solutions Intellectual Property GmbH, 80807 München (DE)
(72) Erfinder: KÄFER, Gerald, 81739 München (DE); SCHMID, Reiner, 80538 München (DE)
(74) Vertreter: Epping - Hermann - Fischer
(86) Internationale Anmeldenummer: PCT/EP2007/050765
(87) Internationale Veröffentlichungsnummer: WO 2007/107394

(56) Entgegenhaltungen:
- WO-A-02/093380
- US-A1- 2002 078 403

## Beschreibung

Die Erfindung betrifft ein Verfahren und ein Managementsystem zum Konfigurieren eines Informationssystems sowie ein zur Durchführung des Verfahrens geeignetes Computerprogrammprodukt.

Für viele Anwendungen ist die Zuverlässigkeit, mit der ein Informationssystem seine Dienste zur Verfügung stellt, von großer Bedeutung. Unter einem Informationssystem ist im Rahmen der Anmeldung jedes Information verarbeitende System zu verstehen, also beispielsweise Anwendercomputersysteme, bestehend aus einem oder mehreren Computern, ebenso wie Computersysteme, die Dienste über ein Netzwerk bereitstellen (Serveranordnungen), Steuerungssysteme (Embedded Systems) oder Systeme im Bereich des Pervasive Computing. Bei den Informationssystemen kann es sich um statische Systeme handeln, deren Konfiguration im wesentlichen manuell durch einen Benutzer oder Systemadministrator vorgegeben ist, oder um dynamische Systeme, deren Konfiguration dynamisch und automatisch geändert werden kann. Bei Serveranwendungen sind solche dynamischen Systeme beispielsweise aus dem Bereich Autonomous Computing bekannt. Beim Pervasive Computing können Komponenten oft automatisch detektiert und ad hoc eingebunden werden, wodurch sich, insbesondere bei mobilen Komponenten, eine dynamische Konfiguration des Systems ergibt.

Um die Zuverlässigkeit von Informationssystemen zu erhöhen, werden verschiedene Konzepte verfolgt. Eine Möglichkeit besteht darin, die negativen Auswirkungen eines auftretenden Fehlers zu minimieren oder zu eliminieren. Eine Methode aus dieser Gruppe, die auch als Fault Tolerant Computing bezeichnet wird, ist beispielsweise das redundante Vorhalten von Ersatzkomponenten, die beim Ausfall einer fehlerhaften Komponente deren Funktion möglichst nahtlos übernehmen.

Ein weiteres Konzept besteht darin, bei dem Entwurf eines Systems auf geeignete Komponenten zurückzugreifen, die eine geringe Fehleranfälligkeit aufweisen. Dieser Lösungsweg wird bei statischen Systemen üblicherweise während der Entwurfsphase des Systems im Rahmen einer Qualitätssicherung beschritten. Problematisch dabei ist, dass im Zuge von Umstrukturierungen und Erweiterungen des Systems nicht gewährleistet ist, dass auch dabei in entsprechendem Maße qualitätssichernde Aspekte zur Minimierung der Fehleranfälligkeit des Systems in Betracht gezogen werden. Darüber hinaus kann dieser Lösungsweg nicht ohne weiteres auf dynamisch konfigurierte Systeme übertragen werden, da diese keine entsprechende Entwicklungsphase aufweisen, in der eine statische Konfiguration festgelegt würde.

Die Druckschrift US 2002/0078403 A1 offenbart eine Vorhersagemethode für die Zuverlässigkeit einer neuen Komponente eines Systems, die eine alte Komponente ersetzen soll. Die Zuverlässigkeit der neuen Komponente wird, ausgehend von der bekannten Zuverlässigkeit der alten Komponente bestimmt, indem konstruktive Unterschiede zwischen der neuen und der alten Komponente und deren Einfluss auf die Zuverlässigkeit abgeschätzt wird.

Aus der Druckschrift WO 02/093380 A1 ist ein Vorhersagesystem zur Vorhersage der Zuverlässigkeit eines komplexen Systems, zum Beispiel eines Computer- oder Informationssystems bekannt, wobei die Komponenten des System und seine Konfiguration vorgegeben werden. Die Vorhersage der Zuverlässigkeit des Gesamtsystems beruht auf einem statistischen Modell, das die in Datenbanken gespeicherten Informationen zur Konfiguration des zu untersuchenden Systems und die ebenfalls in einer Datenbank gespeicherten Informationen zur Fehleranfälligkeit der verschiedenen Komponenten berücksichtigt. Die Ergebnisse der Berechnung werden ausgegeben, wobei zusätzlich eine Warnung vorgesehen ist, falls die vorhergesagte Zuverlässigkeit des Gesamtsystems bestimmte vorgegebene Kriterien nicht erfüllt. Da sich die Berechnung auf ein Modellsystem bezieht, liegt es in der Verantwortung des Benutzers des Vorhersagesystems, dass die Konfiguration und die komponentenspezifischen Fehleranfälligkeitsdaten bei einem realen System tatsächlich denen entsprechen, die der Modellierung zugrunde liegen.

Es ist daher eine Aufgabe der vorliegenden Erfindung, ein Verfahren zum Ändern einer Konfiguration von Informationssystemen zu schaffen, das auch bei dynamischen Systemen gesichert zu einer erhöhten Verfügbarkeit der Dienste des Informationssystems führt. Es ist weiter eine Aufgabe, ein Managementsystem für ein Informationssystem und ein Computerprogrammprodukt anzugeben, die zur Durchführung des Verfahrens geeignet sind.

Diese Aufgabe wird durch ein Verfahren nach Anspruch 1, ein Managementsystem nach Anspruch 14 und ein Computerprogrammprodukt nach Anspruch 17 gelöst. Weiterbildungen der Erfindungen sind in den jeweiligen abhängigen Ansprüchen angegeben.

Das Verfahren zum Ändern einer Konfiguration eines dynamischen Informationssystems weist die folgenden Schritte auf. Es werden Komponenten für das dynamische Informationssystem bereitgestellt und komponentenspezifische Fehleranfälligkeitsdaten in den einzelnen Komponenten gespeichert. Es wird eine Systemkonfiguration für das Informationssystem vorgegeben, durch die angegeben ist, welche der bereitgestellten Komponenten eingesetzt werden sollen. Es werden Fehleranfälligkeitsinformationen für das dynamische Informationssystem in der vorgegebenen Systemkonfiguration abhängig von den in den Komponenten gespeicherten komponentenspezifischen Fehleranfälligkeitsdaten bestimmt und diese Fehleranfälligkeitsinformationen anhand vorgegebener Bewertungskriterien, die an das dynamische Informationssystem gestellten Anforderungen in Bezug auf Zuverlässigkeit definieren, bewertet. In einem abschließenden Schritt wird das dynamische Informationssystem in der vorgegebenen Systemkonfiguration konfiguriert, falls die Fehleranfälligkeitsinformationen die vorgegebenen Bewertungskriterien erfüllen.

Durch das Verfahren wird erreicht, dass zu einer vorgegebenen Systemkonfiguration automatisch anhand der in den Komponenten gespeicherten bereitgestellten komponentenspezifischen Fehleranfälligkeitsdaten der einzelnen Komponenten Fehleranfälligkeitsinformationen für das gesamte Informationssystem bestimmt werden. Vorteilhaft sind die zum Beispiel vom Hersteller angegebenen Fehleranfälligkeitsdaten unverwechselbar mit der Komponente verbunden. Es ist sichergestellt, dass die Fehleranfälligkeitsdaten, die der Berechnung der Fehleranfälligkeitsinformationen für das gesamte Informationssystem zugrunde liegen, auch genau diejenigen der eingesetzten Komponenten sind.

Durch die Bewertung der Fehleranfälligkeitsinformationen anhand der vorgegebenen Bewertungskriterien wird erreicht, dass das Informationssystem nur dann mit der vorgegebenen Systemkonfiguration konfiguriert wird, falls die angegebenen Bewertungskriterien für die Fehleranfälligkeit des Informationssystems erfüllt sind. Auf diese Weise ist für jede vorgegebene Systemkonfiguration gewährleistet, dass das Informationssystem die an das System gestellten Ansprüche bezüglich seiner Zuverlässigkeit erfüllt, die durch die vorgegebenen Bewertungskriterien definiert werden.

In einer weiteren Ausgestaltung des Verfahrens werden die komponentenspezifischen Fehleranfälligkeitsdaten durch weitere, in einer zentralen Datenbank vorgehaltene komponentenspezifischen Fehleranfälligkeitsdaten ergänzt, die von den Komponenten gespiegelt bereitgestellt werden. In einer weiteren Ausgestaltung des Verfahrens werden die komponentenspezifischen Fehleranfälligkeitsdaten durch weitere, in einer zentralen Datenbank vorgehaltene komponentenspezifischen Fehleranfälligkeitsdaten aktualisiert. Beide Ausgestaltungen bietet den Vorteil, jederzeit auf die Fehleranfälligkeitsdaten, zum Beispiel anhand von Erfahrungswerten, einwirken zu können.

In einer weiteren Ausgestaltung des Verfahrens werden die komponentenspezifischen Fehleranfälligkeitsdaten durch weitere, in einer zentralen Datenbank vorgehaltene komponentenspezifischen Fehleranfälligkeitsdaten aktualisiert.

In weiteren vorteilhaften Ausgestaltungen des Verfahrens umfassen die komponentenspezifischen Fehleranfälligkeitsdaten eine Fehlerwahrscheinlichkeit und/oder Ausfallwahrscheinlichkeit der Komponente. Besonders bevorzugt ist dabei die Fehlerwahrscheinlichkeit und/oder die Ausfallwahrscheinlichkeit der Komponente abhängig von einer Betriebsdauer der Komponente angegeben. Weiterhin ist vorteilhaft, wenn die komponentenspezifischen Fehleranfälligkeitsdaten eine Statistik über vorherige Ausfälle der Komponente und/oder eine Angabe über zu erwartende Ausfallzeiten bei einem Austausch der Komponente umfassen. Weiterhin ist vorteilhaft, die komponentenspezifischen Fehleranfälligkeitsdaten ganz oder teilweise abhängig von einer Nutzung der Komponente anzugeben. Besonders vorteilhaft ist dabei, Nutzungsinformationen von dem Informationssystem bereitzustellen und die Fehleranfälligkeitsinformationen für das Informationssystem abhängig von den Nutzungsinformationen und den nutzungsabhängigen komponentenspezifischen Fehleranfälligkeitsdaten zu bestimmen. Durch Fehleranfälligkeitsdaten der genannten Art wird vorteilhafterweise eine dem Informationssystem und gegebenenfalls der Nutzungssituation angepasste und damit vertrauenswürdige Bestimmung der Fehleranfälligkeit des gesamten Informationssystem ermöglicht.

Das erfindungsgemäße Managementsystem zum Ändern einer Konfiguration eines dynamischen Informationssystems umfasst eine Abschätzungseinheit, eingerichtet zum Bestimmen von Fehleranfälligkeitsinformationen über das dynamische Informationssystem abhängig von den komponentenspezifischen Fehleranfälligkeitsdaten und einer vorgegebenen Systemkonfiguration für das dynamische Informationssystem und eine Bewertungseinheit, eingerichtet zum Bewerten der Fehleranfälligkeitsinformationen anhand vorgegebener Bewertungskriterien. Das Managementsystem umfasst außerdem eine Konfigurationseinheit zum Konfigurieren des dynamischen Konfigurationssystems. Das Managementsystem ist ebenso wie das Computerprogrammprodukt dazu eingerichtet, eines der zuvor angegebenen, erfindungsgemäßen Verfahren durchzuführen. Die sich ergebenden Vorteile sind analog zu den des Verfahrens.

In einer besonders bevorzugten Ausführungsform des Managementsystems ist die Bewertungseinheit dazu eingerichtet, der Abschätzungseinheit eine Systemkonfiguration zur Bestimmung von Fehleranfälligkeitsinformationen vorzugeben. Diese Ausführungsform ermöglicht vorteilhafterweise ein automatisches Auffinden einer geeigneten oder der geeignetsten Systemkonfiguration abhängig von den zur Nutzung im Informationssystem bereitstehenden Komponenten.

Die Erfindung wird nachfolgend anhand von Ausführungsbeispielen, dargestellt in vier Figuren, näher erläutert. Es zeigt:
- Figur 1: eine schematische Darstellung eines ersten Ausfüh- rungsbeispiels eines erfindungsgemäßen Management- systems zusammen mit einem Informationssystem;
- Figur 2: ein Flussdiagramm einer Ausführungsform eines er- findungsgemäßen Verfahrens;
- Figur 3: ein zweites Ausführungsbeispiel eines erfindungsge- mäßen Managementsystems zusammen mit einem Informa- tionssystem und
- Figur 4: ein ad hoc selbstkonfigurierendes Informationssys- tem, geeignet zur Durchführung des erfindungsgemä- ßen Verfahrens.

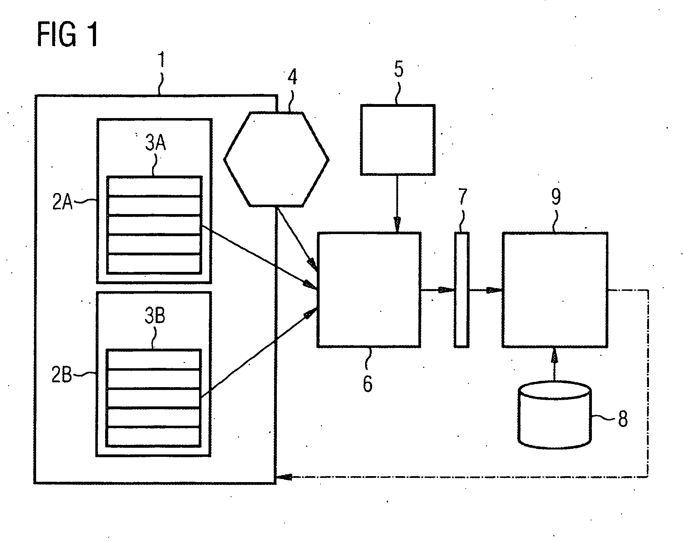

Figur 1 zeigt ein Informationssystem 1, umfassend Komponenten 2A und 2B, die jeweils Fehleranfälligkeitsdaten 3A und 3B aufweisen. Weiterhin umfasst das Informationssystem 1 Nutzungsinformationen 4. Die Fehleranfälligkeitsdaten 3A und 3B und die Nutzungsinformationen 4 werden zusammen mit einer vorgegebenen Systemkonfiguration 5 einer Abschätzungseinheit 6 bereitgestellt. Die Abschätzungseinheit 6 gibt Fehleranfälligkeitsinformationen 7 aus, die zusammen Bewertungskriterien 8 einer Bewertungseinheit 9 bereitgestellt werden. Die Bewertungseinheit 9 ist wiederum mit dem Informationssystem 1 zur Konfiguration des Informationssystems 1 verbunden.

Gleiche oder gleich wirkende Elemente sind in den Figuren mit demselben Bezugszeichen versehen. Mit einem Index (A,B,C) versehene Bezugszeichen weisen auf eine spezifische Komponente 2 oder Fehleranfälligkeitsdaten 3 hin. Wird ein Bezugszeichen ohne Index benützt, verweist es auf das entsprechende Merkmal im Allgemeinen.

Bei dem in Figur 1 dargestellten Informationssystem kann es sich um einen einzelnen Computer oder auch um ein Computersystem aus mehreren einzelnen Computern handeln. Das Informationssystem 1 kann eine Vielzahl von Komponenten aufweisen, von denen einige obligatorisch, andere optional sind. Hier sind beispielhaft nur zwei Komponenten 2, jeweils mit den Fehleranfälligkeitsdaten 3 dargestellt.

Die Fehleranfälligkeitsdaten 3 sind innerhalb der Komponenten 2 gespeicherte Informationen zur Zuverlässigkeit der Komponente 2. Die Fehleranfälligkeitsdaten 3 tragen nicht unmittelbar zur Funktion der Komponente 2 bei, sondern sind als die Komponente 2 beschreibende Metadaten zu verstehen. Die Fehleranfälligkeitsdaten 3 können beispielsweise Angaben über eine Fehler- und Ausfallwahrscheinlichkeit der Komponente 2 oder Angaben über zu erwartende Ausfallzeiten beim Austausch der Komponente 2 umfassen. Weiterhin können auch Fehlertoleranzangaben vorgesehen sein, die angeben, wie tolerant oder immun die Komponenten 2 gegenüber Fehlern anderer Komponenten sind. Die Angaben können anhand von Abschätzungen vom Hersteller gewonnen und vorgegeben sein und gegebenenfalls um statistische oder empirische Beobachtungen vom Benutzer oder von Benutzergruppen ergänzt oder durch sie ersetzt sein.

Die Angaben können dabei entweder als Konstanten angegeben sein, oder als Funktion von weiteren Parametern. Solche Parameter können die Nutzung der Komponente betreffen, beispielsweise können die Angaben zur Fehler- und Ausfallwahrscheinlichkeit einer Komponente in Abhängigkeit einer Gesamtnutzungsdauer, einer täglichen Nutzungsdauer oder eines Betriebsmodus erfolgen. Ein Beispiel für eine Abhängigkeit der Fehleranfälligkeit vom Betriebsmodus ist ein Festplattenlaufwerk, das mit oder ohne einen vorgesehenen flüchtigen Zwischenspeicher (Cache) für Schreibvorgänge genutzt werden kann. Bei Einsatz des Cache wird das Festplattenlaufwerk mit weniger Schreibzugriffen belastet wird und folglich fehlerunanfälliger sein, als wenn es ohne Cache betrieben wird. In umgekehrter Weise ändert sich die Fehlertoleranz des Festplattenlaufwerks, z.B. gegenüber einem Fehler einer Stromversorgungseinheit, da bei deren Ausfall noch im Cache des Festplattenlaufwerks zwischengespeicherte Daten verloren sind, wenn das Festplattenlaufwerk in dem Modus mit Cache betrieben wird. Weiterhin ist denkbar, die Fehleranfälligkeitsdaten 3 abhängig von Umgebungsparametern, z. B. der Umgebungstemperatur, anzugeben.

Die Komponenten 2 können Software-Komponenten sein, beispielsweise Anwendungs- oder Betriebssystemprogramme oder Aktualisierung von Programmen (Updates, Patches) oder können Hardware-Komponenten sein, beispielsweise Erweiterungskarten oder Peripheriegeräte. Zur Bereitstellung der Fehleranfälligkeitsdaten 3 durch die Komponenten 2 können verschiedene Methoden eingesetzt werden. Bei Software-Komponenten bietet sich eine API (Application Programming Interface)-Schnittstelle an. Für Hardware-Komponenten ist beispielsweise als Schnittstelle für Metadaten das Plug und Play-Interface bekannt, das in einer erweiterten Form auch zur Übermittlung der Fehleranfälligkeitsdaten 3 eingesetzt werden kann. Die Fehleranfälligkeitsdaten 3 können dabei in jedem beliebigen Datenformat vorgehalten und übertragen werden, auf Grund der Erweiterbarkeit und Plattformunabhängigkeit ist jedoch eine Kapselung in eine Beschreibungssprache wie XML (eXtensible Markup Language) vorteilhaft.

Das erfindungsgemäße Managementsystem wird im wesentlichen von der Abschätzungseinheit 6 und der Bewertungseinheit 9 gebildet. Vorteilhafterweise wird das Managementsystem unabhängig vom Informationssystem als eigenständige Einheit ausgeführt, es ist jedoch auch möglich, das Managementsystem als Einheit im Informationssystem 1 vorzusehen. Abhängig von der Ausführung können verschiedene Schnittstellen zum Datenaustausch (Einlesen von Fehleranfälligkeitsdaten 3 und Nutzungsinformationen 4, Ausgeben von Konfigurationsanweisungen) mit dem Informationssystem 1 eingesetzt werden. Insbesondere für Managementsysteme mit einer eigenständigen, von dem Informationssystem 1 unabhängigen Hardware bieten sich bekannte Netzwerkübertragungswege an.

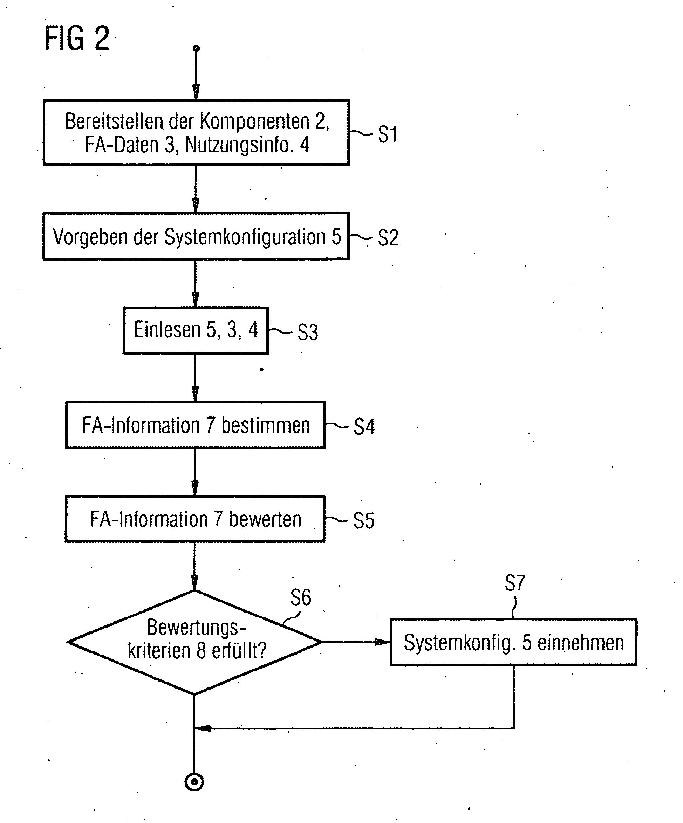

Im folgenden ist im Zusammenhang mit dem Flussdiagramm in Figur 2 ein Ausführungsbeispiel des erfindungsgemäßen Verfahrens, wie es von der in Figur 1 gezeigten Anordnung durchgeführt werden kann, detaillierter dargestellt.

In einem ersten Schritt S1 werden die Komponenten 2 für das Informationssystem 1 zusammen mit ihren Fehleranfälligkeitsdaten 3 bereitgestellt. Dieses kann, wie bereits im Zusammenhang mit Figur 1 beschrieben, dadurch geschehen, dass jede Komponente 2 sie betreffende Fehleranfälligkeitsdaten 3 gespeichert hat. In einer alternativen Ausführungsform ist denkbar, dass die Fehleranfälligkeitsdaten 3 von den Komponenten 2 vorgehalten werden, aber gegebenenfalls um Fehleranfälligkeitsdaten 3 aus einer Datenbank ergänzt oder aktualisiert werden. Um in einem solchen System einen einheitlichen Zugriff auf Fehleranfälligkeitsdaten 3 zu ermöglichen, ist denkbar, dass die in der Datenbank vorgehaltenen Fehleranfälligkeitsdaten 3 von den Komponenten 2 aus der Datenbank abgerufen werden und von der Komponente auf gleiche Art bereitgestellt werden, wie die innerhalb der Komponenten gespeicherten Fehleranfälligkeitsdaten 3 (gespiegelte Fehleranfälligkeitsdaten 3). Weiterhin werden in dem Schritt S1 die Nutzungsinformationen 4 vom.Informationssystem 1 bereitgestellt.

In einem Schritt S2 wird eine Systemkonfiguration 5 für das Informationssystem 1 vorgegeben. Die Systemkonfiguration 5 umfasst dabei zumindest Informationen darüber, welche der bereitgestellten Komponenten 2 im Informationssystem 1 eingesetzt werden bzw. eingesetzt werden sollen. Darüber hinaus können Informationen vorgesehen sein, auf welche Art und Weise die eingesetzten Komponenten 2 miteinander zusammenwirken. Es ist jedoch auch möglich, dass sich dieses implizit aus der Art der ausgewählten Komponenten ergibt.

Eine Angabe der Systemkonfiguration 5 kann auf verschiedene Weise erfolgen. Zum Einen ist eine Angabe auf betriebssystemspezifische Weise möglich, z. B. gemäß WS-Management (Web Services for Management) der Firma Microsoft. Zum Anderen ist der Einsatz eines betriebssystemunabhängigen Standards denkbar, wie beispielsweise CIM (Computer Interface Model) des DMTF (Distributed Management Task Force) Konsortium oder WSDM (Web Services Distributed Management) der OASIS (Organization for the Advancement of Structured Information Standards) Organization.

In einem Schritt S3 werden sowohl die Systemkonfiguration 5, als auch die Fehleranfälligkeitsdaten 3 der gemäß der Systemkonfiguration 5 eingesetzten Komponenten 2 und die Nutzungsinformationen 4 von der Abschätzungseinheit 6 eingelesen.

Unter Berücksichtigung der Systemkonfiguration 5 und den Nutzungsinformationen 4 bestimmt die Abschätzungseinheit 6 daraufhin in einem Schritt S4 anhand der Fehlerabschätzungsdaten 3 die Fehlerabschätzungsinformation 7 für das gesamte Informationssystem 1. Zu diesem Zweck eingesetzte Methoden und Algorithmen sind aus der Theorie der Fehlerförtpflanzung und Fehlerabschätzung bekannt. Beispielhaft sei die Theorie der Markov-Ketten erwähnt, die sich als besonders geeignet zur Beschreibung der Fehlerabschätzung innerhalb von Informationssystemen etabliert hat.

Die von der Abschätzungseinheit 6 erstellten Fehleranfälligkeitsinformationen 7 umfassen ähnliche Angaben wie die Fehleranfälligkeitsdaten 3, jedoch nicht auf eine einzelne Komponente 2 sondern auf das gesamte Informationssystem 1 bezogen. Bei den Fehleranfälligkeitsinformationen 7 können Unsicherheitsniveaus mit angegeben sein, die belegen, wie gesichert sich die Fehleranfälligkeitsinformationen 7 aus den entsprechenden Fehleranfälligkeitsdaten 3 ergeben.

Die von der Abschätzungseinheit 6 der Bewertungseinheit 9 übermittelten Fehleranfälligkeitsinformationen 7 werden in einem nächsten Schritt S5 anhand der Bewertungskriterien 8 bewertet. Diese Bewertungskriterien 8 können beispielsweise von einer Datenbank, der so genannten Policy-Datenbank, der Bewertungseinheit 9 zur Verfügung gestellt werden. Die Bewertungskriterien 8 definieren die an ein Informationssystem gestellten Anforderungen im Bezug auf Zuverlässigkeit. Im einfachsten Fall kann es sich z. B. um einen Schwellenwert für eine gerade noch vertretbare Fehlerwahrscheinlichkeit des Informationssystem handeln. Im Allgemeinen werden die Bewertungskriterien 8 vielschichtiger sein und der Komplexität der übertragenen Fehleranfälligkeitsinformationen 7 Rechnung tragen. Eine Bewertung kann beispielsweise auf unterschiedlichen Zeitskalen erfolgen, z. B. indem Bewertungskriterien 8 abhängig von einer Nutzungsdauer angegeben sind. Weiterhin können Ausfallzeiten, die bei bestimmten Fehlern zu erwarten sind, mitberücksichtigt werden. Dabei ist möglich, die zur Verfügung stehenden Mittel zum Beheben eines eventuell auftretenden Fehlers in die Bewertung einfließen zu lassen, z. B. die Frage, ob ein Fehler von einem internen, permanent verfügbaren Servicetechniker behoben werden kann oder ob ein externer, unter Umständen nicht sofort verfügbarer Servicetechniker eingesetzt werden muss.

In einem Schritt S6 wird entschieden, ob die vorgegebene Systemkonfiguration 5 die an sie gestellten und in den Bewertungskriterien 8 repräsentierten Anforderungen an Zuverlässigkeit erfüllt. Nur wenn diese Anforderung erfüllt wird, wird in einem Schritt S7 das Informationssystem 1 mit der Systemkonfiguration 5 konfiguriert. Werden die gestellten Anforderungen nicht erfüllt, endet das Verfahren nach Schritt S6, andernfalls nach erfolgreicher Konfiguration nach Schritt S7.

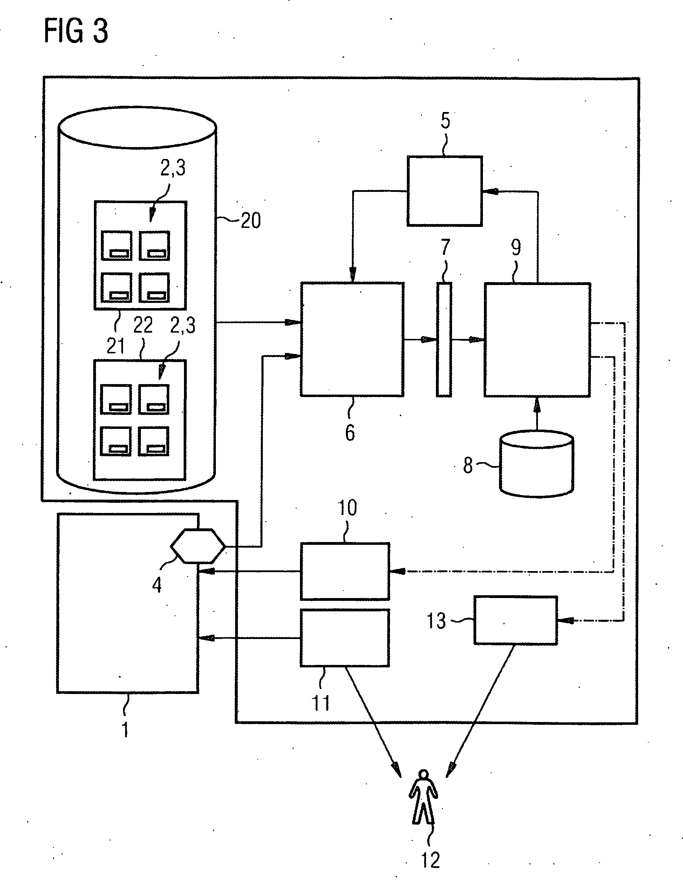

Das Verfahren kann so ausgestaltet sein, dass die Schritte S1 bis S7 einmalig auf Anforderung ausgeführt werden. In alternativen Ausführungsformen kann vorgesehen sein, die bereitgestellten Komponenten 2 und/oder die Fehlerabschätzungsdaten 3 (insbesondere wenn diese nicht von den Komponenten 2 selber, sondern über eine Datenbank bereitgestellt werden) und/oder die vorgegebene Systemkonfiguration 5 permanent auf Änderungen zu überprüfen und die Schritte S3 bis S6 nur auszuführen, wenn solche Änderungen beobachtet wurden. In einer weiteren Ausführungsform ist denkbar, eine neue Systemkonfiguration jeweils anhand des Bewertungsergebnisses einer vorgegebenen Systemkonfiguration 5 vorzugeben, falls in Schritt S6 festgestellt wird, dass die vorgegebene Systemkonfiguration 5 den an die Zuverlässigkeit des Informationssystems gestellten Anforderungen nicht genügt. Mit der neuen Systemkonfiguration als vorgegebene Systemkonfiguration 5 werden danach S3 bis S6 erneut durchgeführt. Das Verfahren kann so lange iterativ durchgeführt werden, bis eine geeignete Konfiguration gefunden wird, die dann in Schritt S7 angenommen wird. Ein Managementsystem, das zur Durchführung eines solchen Verfahrens eingerichtet ist, wird im folgenden anhand von Figur 3 näher erläutert.

Figur 3 zeigt ein weiteres Ausführungsbeispiel eines erfindungsgemäßen Management systems zum Konfigurieren eines Informationssystems. Das in Figur 3 dargestellte System unterscheidet sich von dem in Figur 1 gezeigten vor allem darin, dass eine Komponentendatenbank 20 vorgesehen ist, in der die Komponenten 2 mit den Fehleranfälligkeitsdaten 3 vorgehalten werden. Die Komponenten 2 sind dabei entweder einer ersten Gruppe 21 benötigter Komponenten 2 oder einer zweiten Gruppe 22 optionaler Komponenten 2 zugeordnet. Ein weiterer Unterschied ist, dass die Bewertungseinheit 9 nicht direkt mit dem Informationssystem 1 zum Konfigurieren ist, sondern entweder über eine Einheit zur automatischen Konfiguration 10 oder über eine Einheit zur manuellen Konfiguration 11, die von einer Bedienperson 12 bedient wird. Der Bedienperson 12 wird zu diesem Zweck von der Bewertungseinheit 9 ein Vorschlag zur Systemkonfiguration 13 unterbreitet.

Die in Figur 3 gezeigte Anordnung ist insbesondere geeignet, wenn es sich bei dem Informationssystem 1 um ein größeres Computersystem handelt. Die in der Komponentendatenbank 20 vorgehaltenen Komponenten 2 sind in diesem Falle verständlicherweise Software-Komponenten, also Anwendungen, Updates, Patches.
Die Bewertungseinheit 9 ist in diesem Ausführungsbeispiel dazu eingerichtet, die Systemkonfiguration 5 vorzugeben. Dazu kann beispielsweise eine Menge an möglichen Systemkonfigurationen vorgegeben sein, aus der in Abhängigkeit der verfügbaren Komponenten 2 in der Komponentendatenbank 20 eine Systemkonfiguration 5 ausgewählt wird. Wie bereits im Zusammenhang mit den Figuren 1 und 2 geschildert, wird für diese vorgegebene Systemkonfiguration 5 dann anhand der komponentenspezifischen Fehleranfälligkeitsdaten 3 benutzter Komponenten 2 sowie der Nutzungsinformationen 4 durch die Bewertungseinheit 6 die Fehleranfälligkeitsinformationen 7 erstellt wird. Diese wird wie zuvor der Bewertungseinheit 9 übermittelt und anhand der Bewertungskriterien 8 von der Bewertungseinheit 9 bewertet. Erfüllt die vorgegebene Systemkonfiguration 5 die gestellten Anforderungen nicht, kann von der Bewertungseinheit 9 eine weitere Systemkonfiguration 5 aus den angegebenen Systemkonfigurationen ausgewählt werden und das Verfahren erneut durchgeführt werden. Auf diese Weise kann iterativ eine geeignete, die gestellten Anforderungen erfüllende Systemkonfiguration oder die Systemkonfiguration, die die gestellten Anforderungen am besten erfüllt oder zumindest die Systemkonfigurationen, die den gestellten Anforderungen am nächsten kommt, gefunden werden. Erfüllt diese Systemkonfiguration die Anforderung uneingeschränkt, weist die Bewertungseinheit 9 die Einheit zur automatischen Konfiguration 10 an, die Systemkonfiguration im Informationssystem 1 umzusetzen.

Unter bestimmten Umständen, die ebenfalls durch die Bewertungskriterien 8 festgelegt sind, wird eine gefundene Systemkonfiguration nicht der Einheit zur automatischen Konfiguration 10 weitergeleitet, sondern zunächst als vorgeschlagene Systemkonfiguration 13 der Bedienperson 12 präsentiert. Ein solcher Fall ist z. B. dann denkbar, wenn die vorgeschlagene Systemkonfiguration 13 die gestellten Bedingungen nur knapp oder gerade nicht erfüllt oder wenn zur Umsetzung der neuen Systemkonfiguration Änderung an Hardware-Komponenten des Informationssystems 1 notwendig sind oder wenn die der vorgeschlagenen Systemkonfiguration zugrunde liegenden Fehleranfälligkeitsinformationen mit einem hohen Unsicherheitsniveau belegt sind.

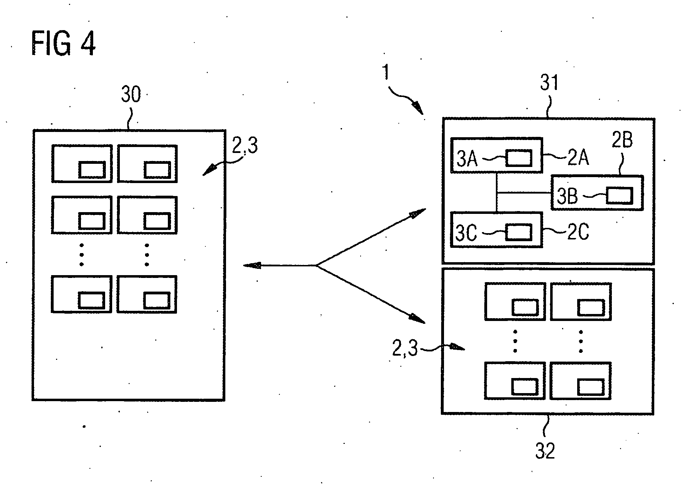

Figur 4 zeigt die Anwendung des erfindungsgemäßen Verfahrens in einem sich ad hoc selbst konfigurierenden dynamischen Informationssystems 1. Solche Systeme finden sich z. B. zunehmend in der Heim- und/oder Gebäudeautomation (Pervasive Computing). Ein solches System kann dabei eine Vielzahl unterschiedlichster Komponenten oder Funktionseinheiten umfassen, die sowohl ortsfeste als auch mobile Geräte sein können. Diese Geräte bedienen sich verschiedener, so genannter Discovery-Techniken, um sich gegenseitig zum Aufbau eines Informationssystems 1 zusammen zu finden. Beispiele solche Techniken sind UPnP (Universal Plug and Play) oder Bluetooth.

In Figur 4 ist auf der linken Seite eine erste Gruppe 30 von Komponenten 2, die sich mittels der genannten Discovery-Techniken gegenseitig aufgefunden haben, dargestellt. Erfindungsgemäß sind die einzelnen Komponenten 2 wiederum mit Fehleranfälligkeitsdaten 3 ausgestattet. Durch aus dem Bereich des Pervasive Computing bekannte Selbstorganisationsmechanismen formiert sich aus der ersten Gruppe 30 aufgefundener Komponenten 2 eine zweite Gruppe 31 eingesetzter Komponenten 2 A-C sowie eine dritte Gruppe 32 redundanter Komponenten 2.

Damit das Informationssystem 1 seine Dienste mit einer gewünschten Zuverlässigkeit bereitstellt, sind die Selbstorganisationsmechanismen, die der dynamischen Konfiguration des Informationssystems 1 zugrunde liegen, erfindungsgemäß so ausgestaltet, dass die Fehleranfälligkeitsinformationen 3 A-C, die von den einzelnen Komponenten 2 A-C bereitgestellt werden, während des Konfigurationsprozesses zur Bestimmung von Fehleranfälligkeitsinformationen herangezogen werden, die nach entsprechender Bewertung in den Konfigurationsprozess einbezogen werden können. In ähnlicher Weise wie der Selbstorganisationsprozess in ad hoc selbst konfigurierenden Systemen ein verteilter Prozess ist, wird auch das Zusammentragen der Fehleranfälligkeitsdaten 3 A-C, das Abschätzen von Fehleranfälligkeitsinformationen einer möglichen Systemkonfiguration und deren Bewertung als verteilter Prozess ausgeführt.

## Patentansprüche

1. Verfahren zum Ändern einer Konfiguration eines dynamischen Informationssystems (1) mit den Schritten
- Bereitstellen von Komponenten (2) für das dynamische Informationssystem (1),
- Speichern von komponentenspezifischen Fehleranfälligkeitsdaten (3) in den einzelnen Komponenten (2),
- Vorgeben einer Systemkonfiguration (5) für das dynamische Informationssystem (1), durch die vorgegeben wird, welche der bereitgestellten Komponenten (2) eingesetzt werden sollen,
- Bestimmen von Fehleranfälligkeitsinformationen (7) für das dynamische Informationssystem (1) in der vorgegebenen Systemkonfiguration (5) abhängig von den in den Komponenten (2) gespeicherten komponentenspezifischen Fehleranfälligkeitsdaten (3),
- Bewerten der Fehleranfälligkeitsinformationen (7) anhand vorgegebener Bewertungskriterien (8), die an das dynamische Informationssystem (1) gestellten Anforderungen in Bezug auf Zuverlässigkeit definieren,
- Konfigurieren des dynamischen Informationssystems (1) in der vorgegebenen Systemkonfiguration (5), falls die Fehleranfälligkeitsinformationen (7) die vorgegebenen Bewertungskriterien (8) erfüllen.

2. Verfahren nach Anspruch 1, **dadurch gekennzeichnet, dass** im Schritt des Vorgebens der Systemkonfiguration eine Menge an möglichen Systemkonfigurationen (5) vorgegeben wird, die Schritte des Bestimmens und Bewertens von Fehleranfälligkeitsinformationen für eine Mehrzahl von Systemkonfiguration (5) der Menge von Systemkonfigurationen (5) iterativ durchgeführt wird, und im Schritt des Konfigurierens, die Systemkonfiguration (5) zum Konfigurieren verwendet wird, die die vorgegebenen Bewertungskriterien (8) am besten erfüllt.

3. Verfahren nach Anspruch 1 oder 2, **dadurch gekennzeichnet, dass** die bereitgestellten Komponenten (2), die Fehleranfälligkeitsdaten (3) und/oder die vorgegebene Systemkonfiguration (5) permanent auf Änderungen überprüfen werden, und die Schritte des Bestimmens und Bewertens der Fehleranfälligkeitsinformationen (7) sowie Konfigurierens des dynamischen Informationssystems (1) nur dann ausgeführt werden, wenn wenigstens eine solche Änderungen beobachtet wurde.

4. Verfahren nach Anspruch 1 oder 2, **dadurch gekennzeichnet, dass** eine neue Systemkonfiguration (5) jeweils anhand des Bewertungsergebnisses der vorgegebenen Systemkonfiguration (5) vorgegeben wird, falls die Fehleranfälligkeitsinformationen (7) die vorgegebenen Bewertungskriterien (8) nicht erfüllen und mit der neuen Systemkonfiguration (5) als vorgegebene Systemkonfiguration (5) die Schritte des Bestimmens und Bewertens der Fehleranfälligkeitsinformationen (7) sowie Konfigurierens des dynamischen Informationssystems (1) erneut durchgeführt werden, wobei das Verfahren so lange iterativ durchgeführt wird, bis eine geeignete Systemkonfiguration (5) gefunden wird, die im Schritt des Konfigurierens angenommen wird.

5. Verfahren nach einem der Ansprüche 1 bis 4, bei dem die in den Komponenten (2) gespeicherten komponentenspezifischen Fehleranfälligkeitsdaten (3) durch weitere, in einer zentralen Datenbank vorgehaltene komponentenspezifische Fehleranfälligkeitsdaten ergänzt werden, die von den Komponenten (2) gespiegelt bereitgestellt werden.

6. Verfahren nach einem der Ansprüche 1 bis 5, bei dem die in den Komponenten (2) gespeicherten komponentenspezifischen Fehleranfälligkeitsdaten (3) durch weitere, in einer zentralen Datenbank vorgehaltene komponentenspezifische Fehleranfälligkeitsdaten aktualisiert werden.

7. Verfahren nach einem der Ansprüche 1 bis 6, bei dem die komponentenspezifischen Fehleranfälligkeitsdaten (3) eine Fehlerwahrscheinlichkeit und/oder eine Ausfallwahrscheinlichkeit der Komponente (2) umfassen.

8. Verfahren nach Anspruch 7, bei dem die Fehlerwahrscheinlichkeit und/oder die Ausfallwahrscheinlichkeit der Komponente (2) abhängig von einer Betriebsdauer der Komponente (2) angegeben sind.

9. Verfahren nach einem der Ansprüche 1 bis 8, bei dem die komponentenspezifischen Fehleranfälligkeitsdaten (3) eine Statistik über vorherige Ausfälle der Komponente (2) und/oder eine Angabe über zu erwartende Ausfallzeiten beim Austausch der Komponente umfassen.

10. Verfahren nach einem der Ansprüche 1 bis 9, bei dem die komponentenspezifischen Fehleranfälligkeitsdaten (3) ganz oder teilweise abhängig von einer Nutzung der Komponente (2) angegeben sind.

11. Verfahren nach Anspruch 10, bei dem Nutzungsinformationen (4) von dem dynamischen Informationssystem (1) bereitgestellt werden und die Fehleranfälligkeitsinformationen (7) für das dynamische Informationssystem (1) abhängig von den Nutzungsinformationen (4) und den nutzungsabhängigen komponentenspezifischen Fehleranfälligkeitsdaten (3) bestimmt wird.

12. Verfahren nach einem der Ansprüche 1 bis 11, bei dem die komponentenspezifischen Fehleranfälligkeitsdaten (3) eine Fehlertoleranzangaben umfassen, die angeben, wie tolerant oder immun die Komponenten (2) gegenüber anderen Komponenten (2) sind.

13. Verfahren nach einem der Ansprüche 1 bis 12, bei dem die Bewertungskriterien (8) von einer Policy-Datenbank zur Verfügung gestellt werden.

14. Managementsystem zum Ändern einer Konfiguration eines dynamischen Informationssystems (1), umfassend:
- eine Abschätzungseinheit (6), eingerichtet zum Bestimmen von Fehleranfälligkeitsinformationen (7) für das dynamische Informationssystem (1) abhängig von in Komponenten (2) des dynamischen Informationssystems (1) gespeicherten, komponentenspezifischen Fehleranfälligkeitsdaten (3) und einer vorgegebenen Systemkonfiguration (5) für das dynamische Informationssystem (1),
- einer Bewertungseinheit (9), eingerichtet zum Bewerten der Fehleranfälligkeitsinformationen (7) anhand vorgegebener Bewertungskriterien (8), und
- eine Konfigurationseinheit (10, 11) zur Konfiguration des dynamischen Informationssystems (1),
wobei das Managementsystem dazu eingerichtet ist, die Schritte des Bestimmens und Bewertens der Fehleranfälligkeitsinformationen (7) sowie Konfigurierens des dynamischen Informationssystems (1) gemäß einem Verfahren nach einem der Ansprüche 1 bis 13 durchzuführen.

15. Managementsystem nach Anspruch 14, bei dem die Bewertungseinheit (9) dazu eingerichtet ist, der Abschätzungseinheit (6) die Systemkonfiguration (5) zur Bestimmung von Fehleranfälligkeitsinformationen (7) vorzugeben.

16. Managementsystem nach Anspruch 14 oder 15, **gekennzeichnet durch** eine Komponentendatenbank (20), wobei in der Komponentendatenbank (20) Softwarekomponenten als Komponenten (2) für das dynamische Informationssystem (1) vorhält.

17. Computerprogrammprodukt mit Programmcode zur Durchführung die Schritte des Bestimmens und Bewertens der Fehleranfälligkeitsinformationen (7) sowie Konfigurierens des dynamischen Informationssystems (1) gemäß einem Verfahren nach einem der Ansprüche 1 bis 13, wenn der Programmcode auf einem Computer (1) abläuft.

## Claims

1. Method for changing a configuration of a dynamic information system (1), having the steps of
- providing components (2) for the dynamic information system (1),
- storing component-specific error susceptibility data (3) in the individual components (2),
- predefining a system configuration (5) for the dynamic information system (1), which configuration predefines which of the provided components (2) are intended to be used,
- determining error susceptibility information (7) for the dynamic information system (1) in the predefined system configuration (5) on the basis of the component-specific error susceptibility data (3) stored in the components (2),
- assessing the error susceptibility information (7) using predefined assessment criteria (8) which define requirements imposed on the dynamic information system (1) with regard to reliability,
- configuring the dynamic information system (1) in the predefined system configuration (5) if the error susceptibility information (7) satisfies the predefined assessment criteria (8).

2. Method according to Claim 1, **characterized in that** a set of possible system configurations (5) is predefined in the step of predefining the system configuration, the steps of determining and assessing error susceptibility information are iteratively carried out for a plurality of system configurations (5) in the set of system configurations (5), and that system configuration (5) which best satisfies the predefined assessment criteria (8) is used for configuration in the configuration step.

3. Method according to Claim 1 or 2, **characterized in that** the provided components (2), the error susceptibility data (3) and/or the predefined system configuration (5) are permanently checked for changes, and the steps of determining and assessing the error susceptibility information (7) and configuring the dynamic information system (1) are carried out only when at least one such change has been observed.

4. Method according to Claim 1 or 2, **characterized in that** a new system configuration (5) is respectively predefined using the assessment result for the predefined system configuration (5) if the error susceptibility information (7) does not satisfy the predefined assessment criteria (8), and, with the new system configuration (5) as the predefined system configuration (5), the steps of determining and assessing the error susceptibility information (7) and configuring the dynamic information system (1) are carried out again, the method being iteratively carried out until a suitable system configuration (5) which is accepted in the configuration step is found.

5. Method according to one of Claims 1 to 4, in which the component-specific error susceptibility data (3) stored in the components (2) are supplemented with further component-specific error susceptibility data which are held in a central database and are provided in mirrored fashion by the components (2).

6. Method according to one of Claims 1 to 5, in which the component-specific error susceptibility data (3) stored in the components (2) are updated by further component-specific error susceptibility data held in a central database.

7. Method according to one of Claims 1 to 6, in which the component-specific error susceptibility data (3) comprise an error probability and/or a failure probability of the component (2).

8. Method according to Claim 7, in which the error probability and/or the failure probability of the component (2) is/are specified on the basis of a service life of the component (2).

9. Method according to one of Claims 1 to 8, in which the component-specific error susceptibility data (3) comprise statistics relating to previous failures of the component (2) and/or a statement on expected failure times when the component is replaced.

10. Method according to one of Claims 1 to 9, in which the component-specific error susceptibility data (3) are entirely or partially specified on the basis of a use of the component (2).

11. Method according to Claim 10, in which use information (4) is provided by the dynamic information system (1), and the error susceptibility information (7) for the dynamic information system (1) is determined on the basis of the use information (4) and the use-dependent component-specific error susceptibility data (3).

12. Method according to one of Claims 1 to 11, in which the component-specific error susceptibility data (3) comprise error tolerance statements which specify how tolerant or immune the components (2) are in comparison with other components (2).

13. Method according to one of Claims 1 to 12, in which the assessment criteria (8) are provided by a policy database.

14. Management system for changing a configuration of a dynamic information system (1), comprising:
- an estimation unit (6) which is set up to determine error susceptibility information (7) for the dynamic information system (1) on the basis of component-specific error susceptibility data (3) stored in components (2) of the dynamic information system (1) and a predefined system configuration (5) for the dynamic information system (1),
- an assessment unit (9) which is set up to assess the error susceptibility information (7) using predefined assessment criteria (8), and
- a configuration unit (10, 11) for configuring the dynamic information system (1),
the management system being set up to carry out the steps of determining and assessing the error susceptibility information (7) and configuring the dynamic information system (1) in accordance with a method according to one of Claims 1 to 13.

15. Management system according to Claim 14, in which the assessment unit (9) is set up to predefine the system configuration (5) for determining error susceptibility information (7) for the estimation unit (6).

16. Management system according to Claim 14 or 15, **characterized by** a component database (20), the component database (20) holding software components as components (2) for the dynamic information system (1).

17. Computer program product having program code for carrying out the steps of determining and assessing the error susceptibility information (7) and configuring the dynamic information system (1) in accordance with a method according to one of Claims 1 to 13 if the program code runs on a computer (1).

## Revendications

1. Procédé pour modifier une configuration d'un système d'information dynamique (1) comprenant les étapes suivantes :
- Mise à disposition de composants (2) pour le système d'information dynamique (1),
- Mémorisation de données de prédisposition aux erreurs (3) spécifiques au composant dans chacun des composants (2),
- Prédéfinition d'une configuration de système (5) pour le système d'information dynamique (1), par laquelle sont prédéfinis les composants (2) mis à disposition qui doivent être utilisés,
- Détermination d'informations de prédisposition aux erreurs (7) pour le système d'information dynamique (1) dans la configuration de système (5) prédéfinie en fonction des données de prédisposition aux erreurs (3) spécifiques au composant mémorisées dans les composants (2),
- Évaluation des informations de prédisposition aux erreurs (7) au moyen de critères d'évaluation prédéfinis (8) qui définissent les exigences imposées au système d'information dynamique (1) en matière de fiabilité,
- Configuration du système d'information dynamique (1) dans la configuration de système (5) prédéfinie si les informations de prédisposition aux erreurs (7) remplissent les critères d'évaluation prédéfinis (8).

2. Procédé selon la revendication 1, **caractérisé en ce que** dans l'étape de prédéfinition d'une configuration de système est prédéfini un nombre donné de configurations de système (5) possibles, l'étape de détermination et d'évaluation des informations de prédisposition aux erreurs étant exécutée de manière itérative pour une pluralité de configurations de système (5) parmi le nombre donné de configurations de système (5) et la configuration de système (5) qui remplit le mieux les critères d'évaluation prédéfinis (8) étant utilisée pour la configuration dans l'étape de configuration.

3. Procédé selon la revendication 1 ou 2, **caractérisé en ce que** les composants (2) mis à disposition, les données de prédisposition aux erreurs (3) et/ou la configuration de système (5) prédéfinie sont constamment contrôlés pour déceler des modifications et l'étape de détermination et d'évaluation des informations de prédisposition aux erreurs (7) et de configuration du système d'information dynamique (1) ne sont exécutées que si au moins l'une desdites modifications a été observée.

4. Procédé selon la revendication 1 ou 2, **caractérisé en ce qu'**une nouvelle configuration de système (5) est à chaque fois prédéfinie au moyen du résultat de l'évaluation de la configuration de système (5) prédéfinie si les informations de prédisposition aux erreurs (7) ne remplissent pas les critères d'évaluation (8) prédéfinis et l'étape de détermination et d'évaluation des informations de prédisposition aux erreurs (7) ainsi que de configuration du système d'information dynamique (1) sont de nouveau exécutées avec la nouvelle configuration de système (5) en tant que configuration de système (5) prédéfinie, le procédé étant exécuté de manière itérative jusqu'à trouver une configuration de système (5) appropriée qui est acceptée dans l'étape de configuration.

5. Procédé selon l'une des revendications 1 à 4, selon lequel les données de prédisposition aux erreurs (3) spécifiques au composant mémorisées dans les composants (2) sont complétées par des données de prédisposition aux erreurs spécifiques au composant supplémentaires conservées dans une base de données centrale, lesquelles sont mises à disposition en miroir par les composants (2).

6. Procédé selon l'une des revendications 1 à 5, selon lequel les données de prédisposition aux erreurs (3) spécifiques au composant mémorisées dans les composants (2) sont actualisées par des données de prédisposition aux erreurs spécifiques au composant supplémentaires conservées dans une base de données centrale.

7. Procédé selon l'une des revendications 1 à 6, selon lequel les données de prédisposition aux erreurs (3) spécifiques au composant incluent une probabilité d'erreur et/ou une probabilité de panne du composant (2).

8. Procédé selon la revendication 7, selon lequel la probabilité d'erreur et/ou la probabilité de panne du composant (2) sont indiquées en fonction d'une durée de fonctionnement du composant (2).

9. Procédé selon l'une des revendications 1 à 8, selon lequel les données de prédisposition aux erreurs (3) spécifiques au composant incluent une statistique sur les pannes précédentes du composant (2) et/ou une indication sur les temps de panne attendus lors du remplacement du composant.

10. Procédé selon l'une des revendications 1 à 9, selon lequel les données de prédisposition aux erreurs (3) spécifiques au composant sont indiquées totalement ou partiellement en fonction d'une utilisation du composant (2).

11. Procédé selon la revendication 10, selon lequel les informations d'utilisation (4) sont mises à disposition par le système d'information dynamique (1) et les informations de prédisposition aux erreurs (7) pour le système d'information dynamique (1) sont déterminées en fonction des informations d'utilisation (4) et des données de prédisposition aux erreurs (3) spécifiques au composant dépendantes de l'utilisation.

12. Procédé selon l'une des revendications 1 à 11, selon lequel les données de prédisposition aux erreurs (3) spécifiques au composant incluent une indication de tolérance aux erreurs qui indique le niveau de tolérance ou l'immunité des composants (2) par rapport aux autres composants (2).

13. Procédé selon l'une des revendications 1 à 12, selon lequel les critères d'évaluation (8) sont mis à disposition par une base de données de politique.

14. Système de gestion pour modifier une configuration d'un système d'information dynamique (1) comprenant :
- une unité d'estimation (6), configurée pour déterminer des informations de prédisposition aux erreurs (7) pour le système d'information dynamique (1) en fonction de données de prédisposition aux erreurs (3) spécifiques au composant mémorisées dans les composants (2) du système d'information dynamique (1) et d'une configuration de système (5) prédéfinie pour le système d'information dynamique (1),
- une unité d'évaluation (9), configurée pour évaluer les informations de prédisposition aux erreurs (7) au moyen de critères d'évaluation prédéfinis (8), et
- une unité de configuration (10, 11) pour configurer le système d'information dynamique (1),
le système de gestion étant configuré pour exécuter les étapes de détermination et d'évaluation des informations de prédisposition aux erreurs (7) ainsi que de configuration du système d'information dynamique (1) conformément à un procédé selon l'une des revendications 1 à 13.

15. Système de gestion selon la revendication 14, avec lequel l'unité d'évaluation (9) est configurée pour pré-indiquer à l'unité d'estimation (6) la configuration de système (5) pour la détermination des informations de prédisposition aux erreurs (7).

16. Système de gestion selon la revendication 14 ou 15, **caractérisé par** une base de données de composants (20), des composants logiciels étant conservés dans la base de données de composants (20) en tant que composants (2) pour le système d'information dynamique (1).

17. Programme informatique comprenant un code de programme pour exécuter les étapes de détermination et d'évaluation des informations de prédisposition aux erreurs (7) ainsi que de configuration du système d'information dynamique (1) conformément à un procédé selon l'une des revendications 1 à 13 lorsque le code de programme est exécuté sur un ordinateur (1).
